# EUROPÄISCHE PATENTSCHRIFT

(11) **EP 1 511 648 B1**
(45) Veröffentlichungstag und Bekanntmachung des Hinweises auf die Patenterteilung: **08.02.2006**
(21) Anmeldenummer: 03735318.2
(22) Anmeldetag: 27.05.2003
(51) Int. Cl.: B60K 35/00

(54) **SEGMENTDISPLAY-ANZEIGEVORRICHTUNG**
SEGMENT DISPLAY DEVICE
DISPOSITIF D'AFFICHAGE A SEGMENTS

(30) Priorität: 12.06.2002 DE 10226083
(43) Veröffentlichungstag der Anmeldung: 09.03.2005
(73) Patentinhaber: SIEMENS AKTIENGESELLSCHAFT, 80333 München (DE)
(72) Erfinder: KOLAR, Anton, 78052 Villingen-Schwenningen (DE)
(86) Internationale Anmeldenummer: PCT/DE2003/001724
(87) Internationale Veröffentlichungsnummer: WO 2003/106209

(56) Entgegenhaltungen:
- DE-C- 19 959 597
- US-A- 5 453 939

## Beschreibung

Die Erfindung bezieht sich auf eine Segmentdisplay-Anzeigevorrichtung, insbesondere zur Anwendung in Kraftfahrzeug-Armaturenbrettern.

In Kraftfahrzeugen sind beispielsweise die Tankfüllstandsanzeige und die Kühlwassertemperaturanzeige meist noch als Zeigerinstrumente mit Skala ausgeführt. Vereinzelt werden diese Anzeigen als Barcode-Anzeigen ausgeführt. Hierbei werden beispielsweise bei einer Tankfüllstandsanzeige Balken eines Barcodes, die sich hinter einem Zifferblatt befinden, entsprechend dem Füllstand im Kraftstofftank angesteuert. Ein zugehöriges Symbol und eine Skala sind auf dem zugehörigen Zifferblatt aufgedruckt.

Aus der DE 199 59 597 C1 ist eine Anzeigevorrichtung bekannt, bei der Informationen vom selben Ort im Wechsel nacheinander mit derselben Grafik aber mit unterschiedlicher Beschriftung angezeigt werden.

Die Aufgabe der vorliegenden Erfindung besteht insbesondere darin, eine Anzeigevorrichtung zur Verfügung zu stellen, mit der der technische Aufwand für die Fertigung von Armaturenbrettern, insbesondere von Kfz-Armaturenbrettern, verringert ist.

Diese Aufgabe wird durch eine Segmentdisplay-Anzeigevorrichtung mit den Merkmalen des Patentanspruches 1 gelöst. Merkmale von vorteilhaften Weiterbildungen und Ausführungsformen der Segmentdisplay-Anzeigevorrichtung sind in den Unteransprüchen 2 bis 7 angegeben.

Die Segmentdisplay-Anzeigevorrichtung gemäß der Erfindung weist mehrere seriell, beispielsweise in einer linearen Reihe oder einer bogenartig angeordneten Reihe angeordnete beleuchtbare Anzeigesegmente auf. Die Anzeige eines aktuellen Wertes eines Systemzustands eines zu überwachenden Systems erfolgt vermittels einer diesem Wert entsprechenden Anzahl von oder einem diesem Wert entsprechenden Muster aus beleuchteten teten Anzeigesegmenten. Erfindungsgemäß kann ein und dieselbe Serie von Anzeigesegmenten wahlweise von voneinander verschiedenen und unabhängigen Ansteuervorrichtungen mit Signalen angesteuert werden, die Werte von voneinander verschiedenen Systemzuständen betreffen.

Die Einstellung der jeweils gewünschten Betriebsart der Segmentdisplay-Anzeigevorrichtung erfolgt vorteilhafterweise allein durch die Wahl der Einbaulage der Segmentdisplay-Anzeigevorrichtung im Armaturenbrett bei dessen Zusammenbau.

Ist die Segmentdisplay-Anzeigevorrichtung in einem Kraftfahrzeug beispielsweise für die Anzeige von zwei verschiedenen Systemzuständen wie Tankfüllstand und Kühlwassertemperatur vorgesehen, so weist die Segmentdisplay-Anzeigevorrichtung zwei unterschiedliche Einbaulagen im Armaturenbrett auf, bei denen die Anzeigesegmente unterschiedlich angesteuert werden.

Die Segmentdisplay-Anzeigevorrichtung zeigt beispielsweise in einer ersten Einbaulage den Tankfüllstand an und in einer zweiten Einbaulage, die beispielsweise gegenüber der ersten Einbaulage um 180° gedreht ist, mit ein und derselben Serie von Anzeigesegmenten die Motorkühlwassertemperatur an.

Zur Anzeige der jeweiligen Betriebsart, weist die Segmentdisplay-Anzeigevorrichtung in diesem Fall vorzugsweise zwei unterschiedliche beleuchtbare Symbole, zum Beispiel eine Tanksäule und ein Thermometer, auf, von denen ebenfalls abhängig von der Einbaulage der Segmentdisplay-Anzeigevorrichtung nur das jeweils zu dem angezeigten Systemzustand gehörige angesteuert und beleuchtet wird.

Die Segmentdisplay-Anzeigevorrichtung weist vorzugsweise für jede ihrer verschiedenen Betriebsarten eine separate Ansteuerschnittstelle auf. Die Auswahl der Ansteuerschnittstelle erfolgt bevorzugt durch die Wahl der Einbaulage der Segmentdisplay-Anzeigevorrichtung in einer zugehörigen Instrumentenaufnahme eines Armaturenbretts.

Alternativ weist die Segmentdisplay-Anzeigevorrichtung eine einzige Ansteuerschnittstelle mit unterschiedlichen, den verschiedenen Betriebsarten zugeordneten Anschlußkonfigurationen auf und erfolgt die Wahl der für eine ausgewählte Betriebsart vorgesehenen Anschlußkonfiguration vorzugsweise wiederum durch die Wahl der Einbaulage der Segmentdisplay-Anzeigevorrichtung in einer zugehörigen Instrumentenaufnahme eines Armaturenbretts.

Die Segmentdisplay-Anzeigevorrichtung ist bevorzugt wahlweise für die Anzeige von Systemzuständen vorgesehen, die von unterschiedlichen Messeinrichtungen in dem zu überwachenden System ermittelt werden.

Bevorzugt ist für jede der verschiedenen Betriebsarten jeweils ein Anzeigesymbol vorgesehen ist, das die zugehörige Betriebsart anzeigt.

Die Segmentdisplay-Anzeigevorrichtung ist besonders bevorzugt zum Einbau in ein Kraftfahrzeug-Armaturenbrett vorgesehen und zeigt in einer ersten Einbaulage im Armaturenbrett beispielsweise den Tankinhalt und in einer zweiten Einbaulage im Armaturenbrett die Motorkühlwassertemperatur an.

Erfolgt die Auswahl der Betriebsart allein durch Auswahl aus unterschiedlichen Einbaulagen, so kann die Segmentdisplay-Anzeigevorrichtung für unterschiedliche Nutzungen als sogenanntes Gleichteil ausgebildet sein. Das heißt, dass ein und dieselbe Anzeigevorrichtung wahlweise für verschiedene Systemzustandsanzeigen genutzt werden kann. Damit ist eine deutlich Kosteneinsparung gegenüber herkömmlichen Lösungen möglich.

Die Auswahl der gewünschten Betriebsart der Segmentdisplay-Anzeigevorrichtung kann aber allein über die Ansteuerschnittstelle erfolgen; das heißt, die Ansteuerschnittstelle weist vorzugsweise mindestens zwei unterschiedliche Anschlußkonfigurationen auf, von denen eine einer ersten Betriebsart und eine einer zweiten Betriebsart zugeordnet ist. Die Umschaltung und Anzeige (zum Beispiel mittels unterschiedlicher Symbole) von einer Betriebsart (zum Beispiel Anzeige des Füllstands eines ersten Bremskreises) in die andere Betriebsart (zum Beispiel Anzeige des Füllstandes eines zweiten Bremskreises) und umgekehrt, kann manuell mit einem Schalter oder automatisch in bestimmten Zeitabständen erfolgen.

Die Segmentdisplay-Anzeigevorrichtung ist vorzugsweise zweifarbig hinterleuchtet. Vorteilhafterweise kann dann für den Warnfall (z. B. bei Erreichen der Reserve im Kraftstofftank oder bei Überschreiten einer Obergrenze der Motorkühlwassertemperatur) die Farbe der Segmentdisplay-Anzeigevorrichtung von beispielsweise gelb auf rot umgeschaltet werden.

Zusätzlich zu den beleuchtbaren Anzeigesegmenten für den Systemzustand kann die Segmentdisplay-Anzeigevorrichtung eine Skala aufweisen, die mittels einem oder mehreren zusätzlich für diesen Zweck vorgesehenen beleuchtbaren Anzeigesegmenten ausgebildet ist.

Mit solchen sogenannten Mehrfachanzeigen läßt sich eine Platzeinsparung auf Instrumententafeln beispielsweise eines Armaturenbretts erzielen.

Die Segmentdisplay-Anzeigevorrichtung kann in einem Anzeigeinstrument vorteilhafterweise in einem Bereich ohne Zifferblatt angeordnet sein.

Weiter Vorteile und Zweckmäßigkeiten der Erfindung ergeben sich aus den im Folgenden in Verbindung mit den Figuren 1 bis 3 näher erläuterten zwei Ausführungsbeispielen. Es zeigen:
- Figur 1: eine schematische Darstellung einer Segmentdisplay-Anzeigevorrichtung mit zwei möglichen Betriebsarten in der ersten Betriebsart;
- Figur 2: eine schematische Darstellung der Segmentdisplay-Anzeigevorrichtung von Figur 1 in der zweiten Betriebsart;
- Figur 3: eine schematische Darstellung einer als Mehrfachanzeige ausgebildeten Segmentdisplay-Anzeigevorrichtung mit zwei möglichen Betriebsarten in der ersten Betriebsart; und
- Figur 4: eine schematische Darstellung der Segmentdisplay-Anzeigevorrichtung von Figur 3 in der zweiten Betriebsart.

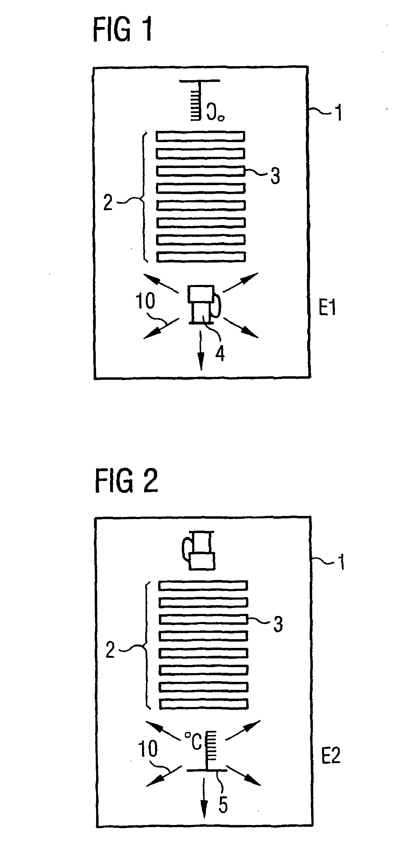

Die Segmentdisplay-Anzeigevorrichtung gemäß dem Ausführungsbeispiel der Figuren 1 und 2 ist eine Anzeigevorrichtung zum Einbau in ein Kraftfahrzeug-Armaturenbrett und weist in einem Anzeigefeld 1 ein einziges Segmentdisplay 2 mit mehreren in einer Reihe übereinander angeordneten beleuchtbaren Anzeigesegmenten 3 auf. Die optische Darstellung eines aktuellen Wertes eines anzuzeigenden Systemzustands wie zum Beispiel Kraftstoff-Füllstand im Kraftstofftank oder Motorkühlwassertemperatur erfolgt vermittels einer diesem Wert entsprechenden Anzahl von beleuchteten Anzeigesegmenten.

Das Ausführungsbeispiel besitzt zwei unterschiedliche Einbaulagen E1 (Figur 1) und E2 (Figur 2), die in der Ebene des Armaturenbretts gegeneinander um 180° verdreht sind.

In der ersten Einbaulage E1 (Figur 1) befindet sich die Segmentdisplay-Anzeigevorrichtung beispielsweise in der Betriebsart "Tankfüllstand". In dieser Betriebsart wird neben dem Segmentdisplay auch ein Tanksäule-Symbol 4 beleuchtet (angedeutet durch die Pfeile 10 um das Symbol 4 herum), das die Betriebsart "Tankfüllstand" der Segmentdisplay-Anzeigevorrichtung anzeigt.

In der gegenüber der ersten Einbaulage E1 in der Ebene des Armaturenbretts um 180° gedrehten zweiten Einbaulage E2 (Figur 2) befindet sich die Segmentdisplay-Anzeigevorrichtung beispielsweise in der Betriebsart "Motorkühlwassertemperatur". In dieser Betriebsart wird neben dem Segmentdisplay auch ein Thermometer-Symbol 5 beleuchtet (angedeutet durch die Pfeile 10 um das Symbol 5 herum), das die Betriebsart "Motorkühlwassertemperatur" der Segmentdisplay-Anzeigevorrichtung anzeigt.

Bei dem Ausführungsbeispiel wird ein und dasselbe Segmentdisplay 2 abhängig von der jeweiligen Einbaulage mit Signalen angesteuert, die Werte von voneinander verschiedenen Systemzuständen (Tankfüllstand und Motorkühlwassertemperatur) betreffen.

Die Segmentdisplay-Anzeigevorrichtung ist wahlweise für die Anzeige von Systemzuständen vorgesehen, die von unterschiedlichen Meßeinrichtungen (Füllstandssensor und Temperatursensor) in dem zu überwachenden System ermittelt werden.

Das Ausführungsbeispiel weist für jede der beiden Betriebsarten eine separate Ansteuerschnittstelle auf. Die Auswahl der verwendeten Ansteuerschnittstelle erfolgt durch die Auswahl der Einbaulage E1,E2 der Segmentdisplay-Anzeigevorrichtung in der zugehörigen Instrumentenaufnahme des Armaturenbretts.

Alternativ weist die Segmentdisplay-Anzeigevorrichtung eine einzige Ansteuerschnittstelle mit unterschiedlichen, den verschiedenen Betriebsarten zugeordneten Anschlußkonfigurationen auf. Hierbei erfolgt die Wahl der für eine ausgewählte Betriebsart vorgesehenen Anschlußkonfiguration wiederum durch die Auswahl der Einbaulage E1,E2 der Segmentdisplay-Anzeigevorrichtung in der zugehörigen Instrumentenaufnahme des Armaturenbretts.

Die Segmentdisplay-Anzeigevorrichtung gemäß dem Ausführungsbeispiel ist vorteilhafterweise als Gleichteil für unterschiedliche Nutzungen ausgelegt. Das heißt, dass ein und dieselbe Anzeigevorrichtung wahlweise für verschiedene Systemzustandsanzeigen genutzt wird.

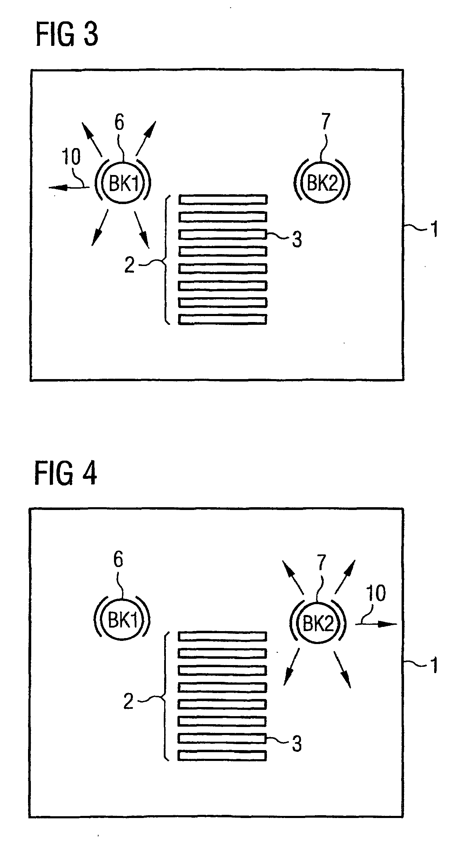

Die Auswahl der gewünschten Betriebsart der Segmentdisplay-Anzeigevorrichtung kann, wie beim Ausführungsbeispiel gemäß den Figuren 3 und 4 aber allein über die Ansteuerschnittstelle erfolgen. Das heißt, die Ansteuerschnittstelle weist mindestens zwei unterschiedliche Anschlußkonfigurationen auf, von denen eine einer ersten Betriebsart (zum Beispiel Anzeige des Füllstands eines ersten Bremskreises) und eine einer zweiten Betriebsart (zum Beispiel Anzeige des Füllstands eines zweiten Bremskreises) zugeordnet ist. Die Umschaltung vom ersten Bremskreis BK1 (Figur 1) zum zweiten Bremskreis BK2 (Figur 2) und umgekehrt, kann manuell mit einem Schalter oder automatisch in bestimmten vorgegebenen Zeitabständen erfolgen. Der jeweils eingestellte Bremskreis BK1,BK2 wird mittels entsprechenden beleuchteten Bremskreis-Symbolen 6,7 angezeigt (angedeutet durch die Pfeile 10 um das jeweils beleuchtete Symbol herum).

Die Segmentdisplay-Anzeigevorrichtungen beider Ausführungsbeispiele sind vorzugsweise zweifarbig hinterleuchtbar. Für den Warnfall (zum Beispiel bei Erreichen der Reserve im Kraftstofftank bzw. in den Bremskreisen oder bei Überschreiten einer Obergrenze der Motorkühlwassertemperatur) kann die Farbe der Segmentdisplay-Anzeigevorrichtung dann von beispielsweise gelb auf rot umschalten.

Zusätzlich zu den Segmentdisplays und den Symbolen können die Segmentdisplay-Anzeigevorrichtungen gemäß den Ausführungsbeispielen jeweils eine Skala aufweisen, die mittels einem oder mehreren zusätzlich für diesen Zweck vorgesehenen beleuchtbaren Anzeigesegmenten realisiert sind.

## Patentansprüche

1. Segmentdisplay-Anzeigevorrichtung mit einer Mehrzahl von in einer Serie (2) angeordneten beleuchtbaren Anzeigesegmenten (3), das zur Anzeige eines Systemzustands eines zu überwachenden Systems vorgesehen ist und die Anzeige vermittels einer diesem Systemzustand entsprechenden Anzahl von oder einer diesem Systemzustand entsprechenden Musters aus beleuchteten Anzeigesegmenten (3) erfolgt, wobei wahlweise mindestens zwei voneinander verschiedene Arten von Systemzuständen anzeigbar sind, **dadurch gekennzeichnet, dass**
die Anzeigevorrichtung in unterschiedlichen Einbaulagen in einer zugehörigen Instrumentenaufnahme eines Armaturenbretts verwendbar ist, und dass eine Festlegung der Betriebsart entsprechend der Einbaulage in der zugehörigen Instrumentenaufnahme des Armaturenbretts erfolgt.

2. Segmentdisplay-Anzeigevorrichtung nach Anspruch 1, die für jede der verschiedenen Betriebsarten eine separate Ansteuerschnittstelle aufweist.

3. Segmentdisplay-Anzeigevorrichtung nach Anspruch 1, die eine Ansteuerschnittstelle mit unterschiedlichen, den verschiedenen Betriebsarten zugeordneten Anschlußkonfigurationen aufweist.

4. Segmentdisplay-Anzeigevorrichtung nach einem der Ansprüche 1 bis 3, die wahlweise für die Anzeige von Systemzuständen vorgesehen ist, die von unterschiedlichen Meßeinrichtungen in dem zu überwachenden System ermittelt werden.

5. Segmentdisplay-Anzeigevorrichtung nach einem der Ansprüche 1 bis 4, bei der für jede der verschiedenen Betriebsarten jeweils ein beleuchtbares Anzeigesymbol (4,5,6,7) vorgesehen ist, das die zugehörige Betriebsart anzeigt.

6. Segmentdisplay-Anzeigevorrichtung nach einem der Ansprüche 1 bis 5, die zum Einbau in ein Kraftfahrzeug-Armaturenbrett vorgesehen ist und die in einer ersten Einbaulage im Armaturenbrett den Tankinhalt anzeigt und in einer zweiten Einbaulage im Armaturenbrett die Motorkühlwassertemperatur anzeigt.

7. Segmentdisplay-Anzeigevorrichtung nach Anspruch 2 oder 3 oder nach einem der Ansprüche 4 bis 6 unter Rückbezug auf Anspruch 2 oder 3, bei der die Ansteuerschnittstellen derart ausgeführt sind, dass durch um vorbestimmte Winkel gegeneinander gedrehte Einbaulagen die unterschiedlichen Betriebsarten eingestellt werden.

## Claims

1. Segment display device having a plurality of illuminable display segments (3) arranged in a series (2) and which is provided for displaying a system status of a system to be monitored, and the display is performed by means of a number of illuminated display segments (3) corresponding to this system status, or by means of a pattern of illuminated display segments (3) corresponding to this system status, in which at least two mutually different types of system statuses can optionally be displayed, **characterized in that** the display device can be used in different installed positions in an associated instrument holder of a dashboard, and **in that** the operating mode is fixed in accordance with the installed position in the associated instrument holder of the dashboard.

2. Segment display device according to Claim 1, which has a separate drive interface for each of the various operating modes.

3. Segment display device according to Claim 1, which has a drive interface with different connection configurations assigned to the various operating modes.

4. Segment display device according to one of Claims 1 to 3, which is optionally provided for displaying system statuses that are determined by different measuring devices in the system to be monitored.

5. Segment display device according to one of Claims 1 to 4, in which an illuminable display symbol (4, 5, 6, 7) that displays the associated operating mode is respectively provided for each of the various operating modes.

6. Segment display device according to one of Claims 1 to 5, which is provided for installation in a motor vehicle dashboard, and which in a first installed position in the dashboard displays the contents of the tank, and in a second installed position in the dashboard displays the engine cooling water temperature.

7. Segment display device according to Claim 2 or 3 or according to one of Claims 4 to 6 with back reference to Claim 2 or 3, in which the drive interfaces are designed in such a way that the different operating modes are set by means of installed positions rotated by predetermined angles in relation to one another.

## Revendications

1. Dispositif d'affichage à segments comportant une pluralité de segments d'affichage (3) disposés sur une rangée (2) et pouvant être éclairés, prévu pour afficher un état d'un système à surveiller et où l'affichage se fait au moyen d'un nombre de segments d'affichage (3) éclairés correspondant à cet état du système ou d'un schéma de segments d'affichage (3) éclairés correspondant à cet état du système, où, au choix, au moins deux sortes différentes l'une de l'autre d'états du système peuvent être affichées, **caractérisé par le fait que** le dispositif d'affichage peut être utilisé dans différentes positions de montage dans un logement correspondant d'un tableau de bord et qu'une définition du mode de fonctionnement a lieu en fonction de la position de montage dans le logement correspondant du tableau de bord.

2. Dispositif d'affichage à segments selon la revendication 1 comportant une interface de commande séparée pour chacun des différents modes de fonctionnement.

3. Dispositif d'affichage à segments selon la revendication 1 comportant une interface de commande ayant différentes configurations de raccordement correspondant aux différents modes de fonctionnement.

4. Dispositif d'affichage à segments selon l'une des revendications 1 à 3, prévu pour l'affichage au choix d'états de système déterminés par différents systèmes de mesure dans le système à surveiller.

5. Dispositif d'affichage à segments selon l'une des revendications 1 à 4, dans lequel il est prévu, pour chacun des différents modes de fonctionnement, un symbole d'affichage pouvant être éclairé (4, 5, 6, 7) qui indique le mode de fonctionnement correspondant.

6. Dispositif d'affichage à segments selon l'une des revendications 1 à 5, prévu pour être installé dans un tableau de bord de véhicule automobile et qui affiche, dans une première position de montage dans le tableau de bord, le contenu du réservoir et, dans une deuxième position de montage dans le tableau de bord, la température du liquide de refroidissement du moteur.

7. Dispositif d'affichage à segments selon la revendication 2 ou 3 ou selon l'une des revendications 4 à 6 en se référant à la revendication 2 ou 3, dans lequel les interfaces de commande sont réalisées de telle manière que les différents modes de fonctionnement sont réglés grâce à des positions de montage décalées l'une par rapport à l'autre d'un angle prédéterminé.
